(19) Europäisches Patentamt
European Patent Office
Office européen des brevets

(11) Veröffentlichungsnummer: **0 017 798 A1**

(12) # EUROPÄISCHE PATENTANMELDUNG

(21) Anmeldenummer: **80101532.2**

(22) Anmeldetag: **23.03.80**

(51) Int. Cl.³: **C 08 G 73/16,** C 08 F 2/46, C 09 D 3/70, H 01 B 3/42

(30) Priorität: **12.04.79 DE 2915011**

(43) Veröffentlichungstag der Anmeldung: **29.10.80 Patentblatt 80/22**

(84) Benannte Vertragsstaaten: **AT BE CH DE FR GB IT NL SE**

(71) Anmelder: **Herberts Gesellschaft mit beschränkter Haftung, Christbusch 25, D-5600 Wuppertal 2 (DE)**

(72) Erfinder: **Bederke, Klaus, Dr., Oststrasse 36, D-4322 Sprockhövel (DE)**
Erfinder: **Kerber, Hermann, Worringer Strasse 77, D-5600 Wuppertal 1 (DE)**

(74) Vertreter: **Türk, Dietmar, Dr. rer. nat. et al, Redies, Redies, Türk & Gille, Patentanwälte Brucknerstrasse 20, D-4000 Düsseldorf 13 (DE)**

(54) **Durch energiereiche Strahlung härtbare modifizierte Polyesterimide, Verfahren zu ihrer Herstellung und deren Verwendung zur Isolierung von elektrischen Drähten.**

(57) Durch energiereiche Strahlung härtbare modifizierte Polyesterimide erhalten durch Umsetzung von Aminen mit 2 primären Aminogruppen mit Carbonsäuren enthaltend 2 in 1.2-Stellung stehende Carboxylgruppen und mindestens eine weitere Carboxylgruppe sowie gegebenenfalls zusätzlich mit anderen mehrwertigen Carbonsäuren oder Anhydriden oder Estern solcher Säuren, und Veresterung, sowie gegebenenfalls Umsetzung mit Polyisocyanaten und/oder Alkoxypolysiloxan, die einen Acryl- oder Methacrylsäureester einkondensiert enthalten, der eine Hydroxylgruppe enthält und an das Polyesterimidmolekül über ein Sauerstoffatom gebunden ist, das an dem Kohlenstoffatom sitzt, welches benachbart ist zum diese Hydroxylgruppe tragenden Kohlenstoffatom. Diese Polymerimide werden zur Isolierung von elektrischen Drähten verwendet.

EP 0 017 798 A1

0017798

Anmelder: Herberts Gesellschaft mit beschränkter Haftung
Christbusch 25
5600 Wuppertal 2

Durch energiereiche Strahlung härtbare modifizierte Polyesterimide, Verfahren zu ihrer Herstellung und deren Verwendung zur Isolierung von elektrischen Drähten.

Die Erfindung betrifft durch energiereiche Strahlung härtbare modifizierte Polyesterimide, ein Verfahren zu ihrer Herstellung und deren Verwendung zur Isolierung von elektrischen Drähten.

Modifizierte Polyesterimide und deren Verwendung zur Isolierung von Elektrodrähten (Magnetdrähten) sind in großer Zahl bekannt. Die Isolierung erfolgt in der Regel dadurch, daß die Elektrodrähte mit einer Lösung oder Schmelze der Polyesterimide beschichtet und die Polyesterimide dann nach der Beschichtung auf dem Draht ausgehärtet werden unter Einwirkung von erhöhter Temperatur. Es besteht ein Bedürfnis nach modifizierten Polyesterimiden für diesen Verwendungszweck, die durch energiereiche Strahlung gehärtet werden können. Es ist

bekannt, daß eine Härtung von polymeren Verbindungen unter Vernetzung bei Einwirkung von energiereicher Strahlung dann möglich ist, wenn die zu härtenden polymeren Verbindungen radikalisch polymerisierbare Doppelbindungen aufweisen. Es ist bisher jedoch nicht gelungen, durch energiereiche Strahlung härtbare modifizierte Polyesterimide herzustellen, die in der Praxis in zufriedener Weise zur Isolierung von Elektrodrähten eingesetzt werden könnten. Der vorliegenden Erfindung liegt die Aufgabenstellung zugrunde, derartige modifizierte Polyesterimide herzustellen und diese zur Isolierung von Elektrodrähten zu verwenden.

Gegenstand der vorliegenden Erfindung ist demgemäß durch energiereiche Strahlung härtbare modifizierte Polyesterimide erhalten durch Umsetzung von Aminen mit zwei primären Aminogruppen mit Carbonsäuren enthaltend zwei in 1.2-Stellung stehenden Carboxylgruppen und mindestens eine weitere Carboxylgruppe sowie gegebenenfalls zusätzlich mit anderen mehrwertigen Carbonsäuren oder Anhydriden oder Estern solcher Säuren, und Veresterung, sowie gegebenenfalls Umsetzung mit Polyisocyanaten und/ oder Alkoxypolysiloxanen,dadurch gekennzeichnet, daß sie einkondensiert enthalten einen Acryl- oder Methacrylester, der eine Hydroxylgruppe enthält und an das Polyesterimidmolekül über ein Sauerstoffatom gebunden ist, das an dem Kohlenstoffatom sitzt, welches benachbart ist zum diese Hydroxylgruppe tragenden Kohlenstoffatom.

Weiterhin ist Gegenstand der Erfindung ein Verfahren

zur Herstellung von durch energiereiche Strahlung härtbaren modifizierten Polyesterimiden durch Umsetzung von Aminen mit zwei primären Aminogruppen mit Carbonsäuren enthaltend zwei in 1.2-Stellung stehende Carboxylgruppen und mindestens eine weitere Carboxylgruppe sowie gegebenenfalls zusätzlich mit anderen mehrwertigen Carbonsäuren oder Anhydriden oder Estern solcher Säuren, und Veresterung, sowie gegebenenfalls Umsetzung mit Polyisocyanaten und/oder Alkoxypolysiloxanen, dadurch gekennzeichnet, daß man nach der Umsetzung der Amine mit den Carbonsäuren mit einen Oxiranring enthaltenden Acryl- oder Methacrylsäureestern verestert.

Als Amine können gemäß der Erfindung diejenigen Verbindungen eingesetzt werden, die auch nach dem Stand der Technik zur Herstellung von Polyesterimiden verwendet werden. Beispiele hierfür sind aliphatische, aromatische oder cycloaliphatische Diamine. Beispiele für aliphatische Diamine sind Äthylendiamin, Hexamethylendiamin, Trimethylhexamethylendiamin. Beispiele für aromatische Diamine sind Diaminodiphenylmethan, Phenylendiamin, Toluylendiamin, Xylylendiamine. Beispiele für cycloaliphatische Ringe enthaltende Diamine sind 4.4'Dicyclohexandiamin, Bisaminomethylnorbornan, Isophorondiamin und 4.4'Diaminodicyclohexylmethan. Es können auch Handelsprodukte eingesetzt werden, die Gemische von Diaminen enthalten. Beispiele hierfür sind die unter dem Warenzeichen Laromin verkauften Produkte der BASF.

Als Carbonsäuren enthaltend zwei in 1.2-Stellung stehende Carboxylgruppen und mindestens einer weiteren Carboxylgruppe können aromatische und aliphatische Carbonsäuren eingesetzt werden. Bevorzugt sind aromatische Carbonsäuren, wie dies auch nach dem Stand der Technik zur Herstellung der Polyesterimide üblich ist, insbesondere Trimellithsäure, Hemimellithsäure, Pyromellithsäure und Mellithsäure oder deren Anhydride. Insbesondere aus Gründen der leichten Zugänglichkeit und des Preises ist die Trimellithsäure bzw. deren Anhydrid bevorzugt.

Als aliphatische Carbonsäuren können z.B. 1,2,3,4-Butantetracarbonsäure oder Tricarbonsäuren eingesetzt werden, die durch Umsetzung von konjugierten aliphatischen Monocarbonsäuren oder deren Glycerinestern wie Holzöl, Rizinenöl, Oiticicaöle und anderer Öle mit konjugierten Doppelbindungen und α,ß-ungesättigten Dicarbonsäuren wie Maleinsäure bzw. deren Anhydrid im Sinne einer Diels-Alder-Reaktion erhalten werden.

Gegebenenfalls können zusätzlich andere mehrwertige Carbonsäuren bzw. deren Anhydride oder niedere Alkylester (vorzugsweise mit 1 bis 4 Kohlenstoffatomen), insbesondere Methylestereingesetzt werden, wie dies nach dem Stand der Technik zur Herstellung von Polyesterimiden üblich ist. Beispiele hierfür sind insbesondere Phthalsäure, Isophthalsäure, Terephthalsäure, Tetrahydrophthalsäure und Endomethylentetrahydrophthalsäure bzw. die entsprechenden teil- oder vollhalogenierten Verbindungen (mit flammhemmenden Eigenschaften) bzw. deren Anhydride oder Ester. Es können aber auch zumindest teilweise noch andere analoge Dicarbonsäuren bzw. deren Anhydride oder Ester eingesetzt werden.

Die Veresterung erfolgt gemäß dem Stand der Technik mittels mehrwertiger Alkohole, insbesondere Äthylenglykol, Propandiol-1,2 und -1,3, Butandiole insbesondere Butandiol-1,4, Hexandiole, insbesondere Hexandiol-1,6, Trimethylhexandiol-1,3 bzw. -1,6, Neopenthylglykol, Pentandiole, Hydroxypivalinsäure-Neopentylglykolester, Pivalylpivalat, 3(4),8(9)-Dihydroximethyl-tricyclo(5.2.1.0$^{2,6}$)decan, Ätherglykole, insbesondere Triäthylenglykol; Glycerin,

Trishydroxyäthylisocyanurat, Trimethylolpropan oder -äthan, Pentaerythrit, Dipentaerythrit. Gemäß der Erfindung können auch diese hydroxylgruppenenthaltenden Verbindungen teilweise zur Veresterung eingesetzt werden. Wenn derartige hydroxylgruppenhaltige Verbindungen mit eingesetzt werden, müssen diese mit den sonstigen Reaktionskomponenten umgesetzt worden sein, ehe gemäß der Erfindung die Veresterung mit einen Oxiranring enthaltenden Acryl- oder Methacrylsäureestern erfolgt.

Das wesentliche Merkmal der Erfindung besteht darin, daß man nach der Umsetzung der Amine mit den Carbonsäuren mit einen Oxiranring enthaltenden Acryl- oder Methacrylsäureestern verestert. Die so erhaltenen modifizierten Polyesterimide enthalten in ihrem Molekül mindestens eine Gruppe der oben definierten Acryl- oder Methacrylsäureester. Diese Gruppen liefern die radikalisch polymerisierbaren Doppelbindungen, die Härtung mittels energiereicher Strahlung ermöglichen. Überraschenderweise ergibt der Einbau dieser speziellen Gruppen Polyesterimide, die sich vorzüglich auf den Elektrodraht applizieren lassen, gleichmäßigen Verlauf ergeben und unter Einwirkung von energiereicher Strahlung zu Überzügen aushärten, deren Eigenschaften die an die Lackdrähte gestellten Anforderungen erfüllen. Insbesondere besitzen die gehärteten Überzüge eine gute Elastizität bei gleichzeitig hoher Härte (Schabefestigkeit). Ein weiteres Merkmal liegt darin, daß die Überzüge besonders gut an dem Elektrodraht haften. Diese Eigenschaften sind möglicherweise u.a. zurückzuführen auf die Hydroxylgruppe, welche an dem Kohlenstoffatom sitzt, das benachbart ist dem Kohlenstoffatom, an dem das Sauerstoffatom gebunden ist, über das die Acryl- oder Methacrylsäureester an das restliche Polyesterimidmolekül gebunden sind.

Die Umsetzung gemäß der Erfindung mit einen Oxiranring enthaltenden Acryl- oder Methacrylsäureester hat den verfahrenstechnisch außerordentlichen Vorteil, daß sie bei sehr niedrigen Temperaturen durchgeführt werden kann, z.B. von etwa 90 bis 150 °C, vorzugsweise 100 bis 130°C.

Als Oxiranring enthaltende Acryl- oder Methacrylsäureester sind Glycidylacrylat oder -methacrylat besonders bevorzugt, da sie leicht zugänglich sind. Die so erhaltenen Polyesterimide gemäß der Erfindung sind dadurch gekennzeichnet, daß sie die Gruppe der Formel

$$-O-CH_2-\underset{\displaystyle OH}{\underset{|}{CH}}-CH_2-O-\overset{\displaystyle O}{\overset{\|}{C}}-CR=CH_2 \qquad I.$$

worin R Wasserstoff oder die Methylgruppe bedeutet, enthalten.

Als einen Oxiranring enthaltende Acryl- oder Methacrylsäureester können auch eingesetzt werden die Umsetzungsprodukte von Acrylsäure oder Methacrylsäure mit Diepoxidverbindungen oder -harzen, im molaren Verhältnis.

Beispiele für derartige Diepoxidverbindungen sind 1,4-Butandioldiglycidyläther, Äthylenglykoldiglycidyläther, N,N-Diglycidylanilin, N,N-Diglycidylcyclohexylamin, Hexahydrophthalsäurediglycidylester, $\Delta^4$-Tetrahydrophthalsäurediglycidylester, Phthalsäurediglycidylester, 3,6-Endomethylen-$\Delta^4$-tetrahydrophthalsäurediglycidylester, 1-Epoxiäthyl-3,4-epoxicyclohexan, 3,4-Epoxicyclohexylmethyl-3,4-epoxicyclohexancarboxylat, Bis-(3,4-epoxi-6-methylcyclohexylmethyl)-adipat, Bisphenol-A-diglycidyläther. Einige derartige Verbindungen sind nachstehend formelmäßig beispielsweise wiedergegeben:

Umsetzungsprodukt 1-Epoxyäthyl-3,4-epoxycyclohexan mit (Meth)acrylsäure:

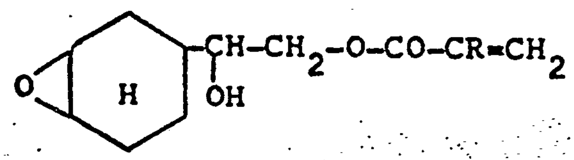

bzw.

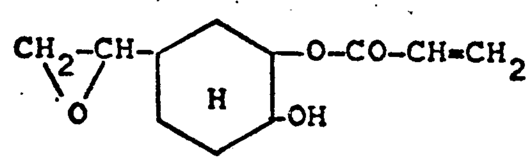

Umsetzungsprodukt 3,4-Epoxycyclohexanmethyl-3,4-epoxycyclohexancarboxylat mit (Meth)acrylsäure:

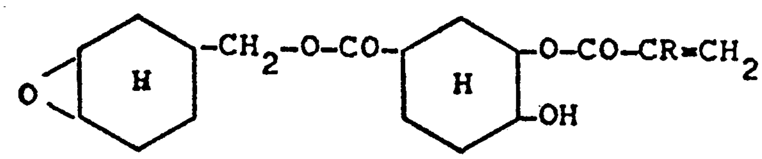

bzw.

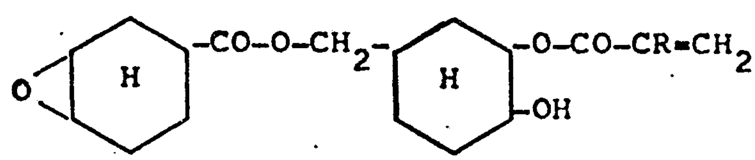

Umsetzungsprodukt Bis-(3,4 Epoxy-6-Methylcyclohexylmethyl)-adipat mit (Meth)acrylsäure:

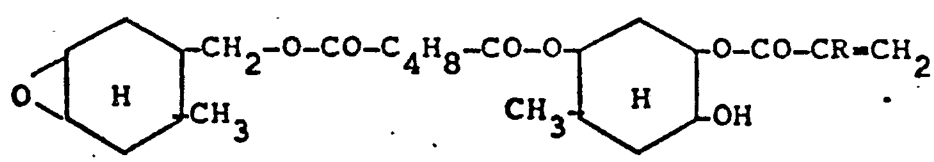

bzw.

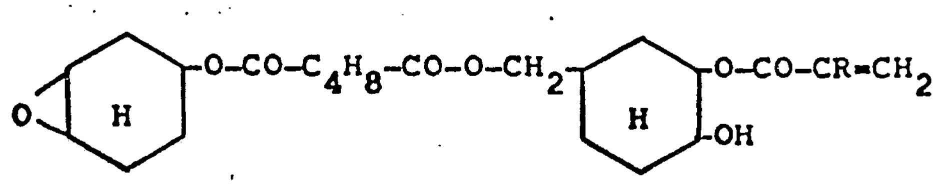

Vorzugsweise werden bei der Herstellung der Polyesterimide gemäß der Erfindung auf 1 Mol Carbonsäure mit zwei in 1,2-Stellung stehenden Carboxylgruppen und mindestens einer weiteren Carboxylgruppe etwa 0.8 bis 1 Äquivalente Amine und etwa 0.8 bis 1.5 Mol von einen Oxiranring enthaltenden Acryl- oder Methacrylsäureestern eingesetzt.

Das Mengenverhältnis der Ausgangsprodukte wird so ausgewählt, daß pro 3000 Molekulargewicht mindestens eine Acryloyl- oder Methacryloylgruppe vorliegen. In den modifizierten Polyesterimiden gemäß der Erfindung ist also vorzugsweise pro 3000 Molekulargewicht mindestens eine Gruppe der obigen Formel I enthalten. Bevorzugt sind pro 3000 Molekulargewicht nicht mehr als 6 Gruppen der Formel I enthalten. Die untere Grenze der Anzahl dieser Gruppen ergibt sich daraus, daß eine ausreichende Härtung durch energiereiche Strahlung ermöglicht wird, da diese Gruppen für die Härtung verantwortlich sind. Die obere Grenze für die Zahl dieser Gruppen wird dadurch bestimmt, daß bei einer zu großen Anzahl eine Versprödung der ausgehärteten Harze eintritt. Besonders bevorzugt ist es deshalb, daß pro 1500 bis 2500 Molekulargewicht eine Gruppe der obigen Formel I vorliegt.

Durch die Umsetzung der einen Oxiranring enthaltenden Acryl- oder Methacrylsäureester mit den anderen Aus-

0017798

gangsverbindungen bildet sich eine Hydroxylgruppe. Diese Hydroxylgruppe kann mit anderen Verbindungen, die mit Hydroxylgruppen reagieren, umgesetzt werden. Hierzu gehören z.B. Polyisocyanate und/oder Alkoxipolysiloxane, wie sie auch zur Modifizierung der bekannten Polyesterimide eingesetzt werden können. Besonders bevorzugt sind Di- und Triisocyanate wie Hexamethylendiisocyanat, Toluylendiisocyanat, Isophorondiisocyanat, Umsetzungsprodukte aus einem Mol Wasser und drei Molen Hexamethylendiisocyanat (Desmodur N der Bayer AG), ferner Isocyanatgruppen enthaltende Umsetzungsprodukte mehrwertiger Alkohole mit Polyisocyanaten, beispielsweise das Umsetzungsprodukt aus einem Mol Trimethylolpropan mit drei Molen Toluylendiisocyanat. Ferner sind geeignet dimerisierte oder polymerisierte Isocyanate.

Beispiele für Alkoxypolysiloxane sind zwei- bis fünffunktionelle Alkoxygruppen enthaltende acyclische oder cyclische Alkylphenylsiloxane, vorzugsweise mit einem Molekulargewicht von etwa 500 bis 2000. Derartige Verbindungen werden z.B. von der Firma Dow Corning, USA, unter der Typenbezeichnung Silikone-Intermediate Z-6188 oder Q1-3037 und von der Firma Wacker Chemie, Bundesrepublik Deutschland, unter der Typenbezeichnung SY 231 vertrieben.

Die erwähnten Hydroxylgruppen können aber auch mit anderen Carbonsäuren verestert werden. Dies ist jedoch in der Regel ziemlich schwierig, weil es sich um sekundäre Hydroxylgruppen handelt, die eine verminderte Reaktionsfähigkeit aufweisen.

Beim Verfahren gemäß der Erfindung reagiert im einfachsten Falle die weitere Carboxylgruppe der Carbonsäuren

mit zwei in 1,2-Stellung stehenden Carboxylgruppen und mindestens einer weiteren Carboxylgruppe mit dem Oxiranring der einen Oxiranring enthaltenden Acryl- oder Methacrylsäureester. Es ist aber auch möglich, daß weitere esterbildende Ausgangskomponenten eingesetzt werden, so daß die weitere Carboxylgruppe der Carbonsäure mit zwei in 1,2-Stellung stehenden Carboxylgruppen zunächst mit anderen hydroxyfunktionellen Verbindungen reagiert und am Kettenende dann die einen Oxiranring enthaltenden Acryl- oder Methacrylsäureester daran gebunden werden. Als Verbindungsglieder zwischen der Carbonsäure mit zwei in 1,2-Stellung stehenden Carboxylgruppen und mindestens einer weiteren Carboxylgruppe einerseits und den einen Oxiranring enthaltenden Acryl- oder Methacrylsäureestern andererseits können in diesem Sinne auch die oben erwähnten Polyisocyanate und/oder Alkoxypolysiloxane eingesetzt werden.

Zur Herstellung der Polyesterimide gemäß der Erfindung können zusätzlich Öle eingesetzt werden, die den Polyesterimiden insbesondere eine gute Elastizität verleihen.

Geeignete Öle sind Konjugenöle, die mit α,ß-ungesättigten Carbonsäuren oder deren Anhydriden, vorzugsweise Maleinsäureanhydrid, umgesetzt sind. Diese Umsetzungsprodukte reagieren mit den Aminogruppen der Amine unter Bildung von fünfgliedrigen Imidringen und werden so in das Polyesterimid eingebaut (vgl. DE-OS 28 56 050).

Das Verfahren zur Herstellung der modifizierten Polyesterimide gemäß der Erfindung erfolgt im Prinzip wie bei der Herstellung der bekannten Polyesterimide, d.h. die Ausgangskomponenten werden mit oder ohne Gegenwart eines Schleppmittels (z.B. Xylol) durch Erhitzen auf Temperaturen im Bereich von etwa 140 bis etwa 220°C umgesetzt.

Die obere Grenze wird bestimmt durch das Vermeiden von Zersetzungsreaktionen, die untere Grenze durch eine genügende Umsetzung in angemessener Zeit. Gegebenenfalls können übliche Veresterungskatalysatoren und/oder sonstige Zusatz- und Hilfsstoffe eingesetzt werden. Beispiele für Veresterungskatalysatoren sind Titanate wie Butyltitanat, Acetate wie Zinkacetat, Antimonoxid, Orthophosphorsäure, phosphorige Säure, Triphenylphosphit, Triphenylphosphin.

Die Herstellung erfolgt gemäß der Erfindung derart, daß zunächst die Amine mit den mehrwertigen Carbonsäuren unter Bildung von Imiden umgesetzt werden. Die freien Carboxylgruppen, die von den aromatischen Carbonsäuren mit zwei in 1,2-Stellung stehenden Carboxylgruppen und mindestens einer weiteren Carboxylgruppe stammen, werden dann zweckmäßig bei Temperaturen im Bereich von etwa 100 bis 130°C mit den einen Oxiranring enthaltenden Acryl- oder Methacrylsäureestern zur Reaktion gebracht. Die sonstigen oben erwähnten Ausgangsprodukte können dann mit den so erhaltenen Reaktionsprodukten umgesetzt werden, oder vor der Umsetzung mit den einen Oxiranring enthaltenden Acryl- oder Methacrylsäureestern.

Nach beendeter Umsetzung wird, wenn ein Schleppmittel verwendet wird, dieses zweckmäßig abdestilliert. Das erhaltene Harz kann gelagert werden.

Für die Verwendung zur Isolierung von Elektrodrähten werden die so hergestellten modifizierten Polyesterimide in unverdünnter Form oder bevorzugt im Gemisch mit copolymerisierbaren monomeren Verbindungen in üblichen Drahtlackiermaschinen auf den Elektrodraht appliziert. Geeignete Viskositäten liegen zwischen 500 und 20 000 m Pa s / 25°C.

Beispiele für die copolymerisierbaren monomeren Verbindungen sind Methylmethacrylat,

Butylacrylat, Butylmethacrylat, iso-Butylacrylat, iso-Butylmethacrylat, tert.-Butylacrylat, 2-Äthylhexylacrylat, 2-Äthylhexylmethacrylat, Laurylacrylat, Dihydrodicyclopentadienylacrylat, Äthyldiglykolacrylat, Hydroxyäthylacrylat, Hydroxyäthylmethacrylat, Hydroxypropylacrylat, Hydroxipropylmethacrylat, Butandiolmonoacrylat, Äthandioldiacrylat, Butandioldiacrylat, Triäthylenglykoldiacrylat, Tetraäthylenglykoldiacrylat, Polyäthylenglykoldiacrylat, Hexandioldiacrylat, Neopentylglykoldiacrylat, 3-Methylpentandioldiacrylat, Trimethylolpropantriacrylat, Pentaerythrittriacrylat, Pentaerythrittetraacrylat, Vinylacetat, Vinylpropionat, Vinylacrylat, Vinylcarbazol, N-Vinylpyrrolidon, 1-Vinylimidazol, Trivinylcyclohexan, Triallylisocyanurat, Styrol, Vinyltoluol, Divinylbenzol, Acrylamid und Acrylnitril.

Die Applikation auf den Elektrodraht erfolgt bei Temperaturen von etwa 10 bis 80°C, vorzugsweise bei Raumtemperatur. Die Härtung durch Einwirkung energiereicher Strahlung erfolgt unter Verwendung von für diesen Zweck an sich bekannten Energiequellen. Beispiele sind Quecksilberdampf-Hochdruckstrahler, zweckmäßig mit einer Leistung von etwa 30 bis 100 Watt $cm^{-1}$, sonstige Strahlungsquellen mit einem Anteil an UV-Strahlung, aktinische Strahlung, Elektronen-Strahlung, zweckmäßig mit einer Leistung von etwa 100 bis 350 KV.

Wenn mit UV-Strahlung gehärtet wird, enthalten die applizierten Gemische übliche Photoinitiatoren. Beispiele hierfür sind Benzoinalkyläther wie Benzoinäthyl-, isopropyl- und -n-butyläther; Acetophenon-Derivate wie Diäthoxyacetophenon, p.-tert.-Butyltrichloracetophenon, 4-Phenoxytrichloracetophenon; Acyloximester wie 1-Phenyl-1,2-propandion-2-(O-äthoxycarbonyl)oxim; Ketale wie Benzildimethylketal; Thioxanthone wie 2-Chlorthioxanthon, 2-Methylthioxanthon, 4-Isopropylthioxanthon, 2-Phenylthioxanthon, 2-Benzylthioxanthon, 2-Acetylthioxanthon; Keton/Amin-Kombination; aromatische Ketone wie Benzophenon, Benzil, Anthrachinon; tert.Amine wie Triäthylamin, Dimethyläthanolamin, Äthyl-4-dimethylaminobenzoat; Michler's Keton; Dibenzosuberon, 6,11-Dihydrodibenzothiepin-11-on(9.10), Fluorenon, 1-(4-Isopropylphenyl)-2-hydroxy-2-methylpropan-1-on, 2-Hydroxy-2-methyl-1-phenyl-propan-1-on.

Übliche Inhibitoren sind z.B. Hydrochinon, Hydrochinonmonomethyläther, p-tert.-Butylbrenz-Katechin, Toluhydrochinon, Phenothiazin.

Beispiel 1

In einem 2 l.-Dreihalskolben, der mit Rührer, Thermometer, Auskreiser und Kühler ausgestattet ist, werden 199 g (1,292 Mol) Bisaminomethylnorbornan und 130 g Xylol vorgelegt und auf 90°C erwärmt. Nach Zugabe von 197 g (1,296 Mol) Tetrahydrophthalsäureanhydrid steigt die Temperatur auf etwa 132°C. Danach wird auf 150°C erhitzt und bei dieser Temperatur unter Xylolumlauf und 23 g Wasserabspaltung bis zu einer Säurezahl unter 3 kondensiert. Danach werden 273 g (1,422 Mol) Trimellithsäureanhydrid zugegeben. Es wird auf 150°C erhitzt, unter ca. 23 g Wasserabspaltung bis zu einer Säurezahl von 153 kondensiert und anschließend das Xylol im Vacuum abdestilliert.

Nach Stabilisierung mit 1,5 g Hydrochinon werden 105 g Hydroxypropylacrylat zugefügt, und es wird auf 120°C gekühlt. Anschließend werden mit Hilfe eines Tropftrichters innerhalb von 30 Minuten 242 g (1,704 Mol) Glycidylmethacrylat zudosiert. Danach wird etwa 2 Stunden bei 120°C gehalten, bis zu einer Säurezahl von 11,7.

Beispiel 2

Nach der Arbeitsweise, wie sie im Beispiel 1 beschrieben wurde, werden 310 g (1,292 Mol) eines flüssigen cycloaliphatischen Diamins mit einem H-aktiv-Äquivalentgewicht von 60 (Handelsprodukt Laromin C 260 der Firma BASF AG) und 130 g Xylol mit 197 g (1,296 Mol) Tetrahydrophthalsäureanhydrid zur Reaktion gebracht und auf eine Säurezahl unter 3 kondensiert. Anschließend erfolgt die Umsetzung mit 273 g (1,422 Mol) Trimellithsäureanhydrid, Entfernen der Schleppflüssigkeit Xylol im Vacuum, Stabilisieren mit 1,5 g Hydrochinon und Verdünnen mit 128 g Hydroxypropylacrylat.

Danach werden 242 g (1,709 Mol) Glycidylmethacrylat bei 120°C innerhalb von 30 Minuten zugetropft, und es wird 1,5 Stunden bei dieser Temperatur bis zu einer Säurezahl von 15,9 gehalten.

Beispiel 3

In einem 2 l.-Dreihalskolben, der mit Rührer, Thermometer, Auskreiser und Kühler ausgerüstet ist, werden 190 g (0,216 Mol) rohes Holzöl und 53 g (0,541 Mol) Maleinsäureanhydrid gefüllt und unter Rühren auf 60°C erhitzt. Durch exotherme Reaktion steigt die Temperatur auf 116°C. Danach wird auf 120°C erhitzt und 3 Stunden lang bei dieser Temperatur gehalten.

Anschließend werden 75 g Xylol, 18 g (0.118 Mol) Tetrahydrophthalsäureanhydrid und 32 g (0.167 Mol) Trimellithsäureanhydrid hinzugefügt und auf 130°C erhitzt. Nach Zugabe von 53 g (0.344 Mol) Bisaminomethylnorbornan wird die exotherme Reaktion abgewartet und dann auf

160°C erhitzt. Bei dieser Temperatur wird unter Xylol-Umlauf gefahren, bis 12 ml Wasser abgeschieden sind. Dann wird unter Vacuum das Xylol abdestilliert. Die Säurezahl beträgt 74,7.

Bei 140°C wird 1 g Hydrochinon und bei 130°C werden 82 g Hydroxypropylacrylat zugesetzt. Anschließend werden mit Hilfe eines Tropftrichters 31 g (0.218 Mol) Glycidylmethacrylat innerhalb von 10 Minuten zudosiert. Danach läßt man 90 Minuten lang bei 120°C nachreagieren und verdünnt mit weiteren 198 g Hydroxypropylacrylat.

Kennzahlen: Säurezahl = 27,5 mg KOH/g
Viskosität = 4830 mPa.s/25°C

Beispiel 4

In der gemäß Beispiel 3 erhaltenen Lösung werden 3,5 Gew.-% Benzildimethylketal bei 60°C gelöst.

Ein Kupferrunddraht, Durchmesser 2 mm, wird zur Entfernung der Ziehmittel und zur Rekristallisation des Kupfers durch eine Glühe gezogen. Anschließend wird der Kupferdraht in einer üblichen Drahtlackieranlage mit der Lösung beschichtet. Bei vertikaler Drahtführung wird der beschichtete Draht durch seitlich angebrachte Quecksilberdampfhochdruckstrahler mit je 80 Watt pro cm Leistung (auf jeder Seite 2 Strahler) bei einer Abzugsgeschwindigkeit von 2 m/min. ausgehärtet. Die Einzelschichtdicke beträgt 15 bis 20 µm, die Gesamtschichtdicke nach 4 Durchzügen 60 bis 80 µ.

Die Lackfilme weisen eine konzentrische Verteilung auf dem Kupferrunddraht auf, besitzen eine hervorragende

Oberflächenglätte und Porenfreiheit, hohe Oberflächenhärte und ausgezeichnete Elastizität auf dem Kupferdraht.

Beispiel 5

Aus 80 Teilen der Lösung von Beispiel 3 und 20 Teilen Lösung von Beispiel 1 wird durch Zugabe von 3,5 Teilen Benzildimethylketal eine UV-härtbare Mischung hergestellt. Es wird wie in Beispiel 4 beschrieben beschichtet und ausgehärtet.

Patentansprüche:

1. Durch energiereiche Strahlung härtbare modifizierte Polyesterimide erhalten durch Umsetzung von Aminen mit zwei primären Aminogruppen mit Carbonsäuren enthaltend zwei in 1.2-Stellung stehende Carboxylgruppen und mindestens eine weitere Carboxylgruppe sowie gegebenenfalls zusätzlich mit anderen mehrwertigen Carbonsäuren oder Anhydriden oder Estern solcher Säuren, und Veresterung, sowie gegebenenfalls Umsetzung mit Polyisocyanaten und/oder Alkoxypolysiloxanen, d a d u r c h g e k e n n z e i c h n e t, daß sie einkondensiert enthalten einen Acryl- oder Methacrylsäureester, der eine Hydroxylgruppe enthält und an das Polyesterimidmolekül über ein Sauerstoffatom gebunden ist, das an dem Kohlenstoffatom sitzt, welches benachbart ist zum diese Hydroxylgruppe tragenden Kohlenstoffatom.

2. Modifizierte Polyesterimide nach Anspruch 1, dadurch gekennzeichnet, daß sie als Acryl- oder Methacrylsäureester die Gruppe der Formel

$$-O-CH_2-\underset{\displaystyle OH}{\underset{|}{CH}}-CH_2-O-\overset{\displaystyle O}{\overset{\|}{C}}-CR=CH_2 \qquad I.$$

worin R Wasserstoff oder die Methylgruppe bedeutet, enthalten.

3. Modifizierte Polyesterimide nach Anspruch 1 oder 2, dadurch gekennzeichnet, daß sie pro 3000 Molekulargewicht mindestens eine Gruppe der Formel I enthalten.

4. Verfahren zur Herstellung von durch energiereiche Strahlung härtbaren modifizierten Polyesterimiden durch Umsetzung von Aminen mit zwei primären Aminogruppen mit Carbonsäuren

enthaltend zwei in 1.2-Stellung stehende Carboxylgruppen und mindestens eine weitere Carboxylgruppe sowie gegebenenfalls zusätzlich mit anderen mehrwertigen Carbonsäuren oder Anhydriden oder Estern solcher Säuren, und Veresterung, sowie gegebenenfalls Umsetzung mit Polyisocyanaten und/oder Alkoxypolysiloxanen, dadurch gekennzeichnet, daß man nach der Umsetzung der Amine mit den Carbonsäuren mit einen Oxiranring enthaltenden Acryl- oder Methacrylsäureestern verestert.

5. Verfahren nach Anspruch 4, dadurch gekennzeichnet, daß man mit Glycidylacrylat oder -methacrylat verestert.

6. Verfahren nach einem oder mehreren der Ansprüche 4 bis 5, dadurch gekennzeichnet, daß auf 1 Mol Carbonsäure mit zwei in 1.2-Stellung stehenden Carboxylgruppen und mindestens einer weiteren Carboxylgruppe etwa 0.8 bis 1 Äquivalent Amine und etwa 0.8 bis 1.5 Mol einen Oxiranring enthaltende Acryl- oder Methacrylsäureester eingesetzt werden.

7. Verfahren nach einem oder mehreren der Ansprüche 4 bis 6, dadurch gekennzeichnet, daß die Ausgangsverbindungen in solchen Mengen eingesetzt werden, daß im Polyesterimid pro 3000 Molekulargewicht mindestens eine Acryloyl- oder Methacryloylgruppe vorliegen.

8. Verwendung der modifizierten Polyesterimide nach Ansprüchen 1 bis 7 zur Isolierung von elektrischen Drähten durch Beschichten der Drähte und Härten mittels energiereicher Strahlung.

Europäisches Patentamt

# EUROPÄISCHER RECHERCHENBERICHT

Nummer der Anmeldung
EP 80101532.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | AU - B - 446 161 (PPG INDUSTRIES) + Ansprüche; Seite 8, letzter Absatz bis Seite 19, 1. Absatz; Seite 38, Zeilen 4-9 + | 1-5,7, 8 |
| | AT - B - 275 157 (DR. BECK) + Gesamt + | 1,8 |
| | AT - B - 323 298 (VIANOVA) + Gesamt + | 1-5,7 |
| | AT - B - 335 023 (VIANOVA) + Gesamt + | 1-5,7 |

KLASSIFIKATION DER ANMELDUNG (Int.Cl. 3)

C 08 G 73/16
C 08 F 2/46
C 09 D 3/70
H 01 B 3/42

RECHERCHIERTE SACHGEBIETE (Int. Cl. 3)

C 08 G 73/00
C 08 F
C 09 D
H 01 B

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 11-07-1980 | WEIGERSTORFER |